# EUROPÄISCHE PATENTSCHRIFT

(11) **EP 0 613 233 B1**
(45) Veröffentlichungstag und Bekanntmachung des Hinweises auf die Patenterteilung: **22.05.1996**
(21) Anmeldenummer: 93103127.2
(22) Anmeldetag: 26.02.1993
(51) Int. Cl.: H02M 3/335

(54) **Schaltungsanordnung zum Ansteuern der Schaltglieder eines Auf-Abwärts-Spannungswandlers**
Circuit arrangement to control the switches of a step-up/step-down voltage converter
Circuit pour contrôler les éléments de commutation d'un convertisseur de tension survolteur-abaisseur

(43) Veröffentlichungstag der Anmeldung: 31.08.1994
(73) Patentinhaber: Siemens Nixdorf Informationssysteme Aktiengesellschaft, D-33102 Paderborn (DE)
(72) Erfinder: Busch, Peter, Dipl-Ing., W-8900 Augsburg (DE); Sterzik, Willi, Dipl-Ing., W-8900 Augsburg (DE)
(74) Vertreter: Fuchs, Franz-Josef, Dr.-Ing.

(56) Entgegenhaltungen:
- EP-A- 0 099 596
- EP-A- 0 392 419
- EP-A- 0 446 383
- US-A- 4 763 237

## Beschreibung

Die Erfindung betrifft eine Schaltungsanordnung zum Ansteuern der Schaltglieder eines Auf-Abwärts-Spannungswandlers gemäß dem Oberbegriff des Anspruchs 1.

Ein Auf-Abwärts-Spannungswandler, der nach dem stromgespeisten Gegentaktwandlerprinzip aufgebaut ist, weist in einem Längszweig der zugehörigen Schaltungsanordnung ein erstes Schaltglied auf, das eine Eingangsspannung auf einen vorgegebenen Wert einer Ausgangsspannung herabsetzen kann. Ferner sind in der Schaltungsanordnung zwei zweite Schaltglieder jeweils in einem Querzweig angeordnet, die die Eingangsspannung auf einen vorgegebenen Wert der Ausgangsspannung heraufsetzen können. Ein solcher Auf-Abwärts-Spannungswandler ist beispielsweise aus der Druckschrift EP-A-0 446 383, insbesondere Figur 5 bekannt.

Maßgebend für die Arbeit der Schaltglieder ist eine Schaltungsanordnung zu ihrer Ansteuerung. Eine Ansteuerung der Schaltglieder kann in der Weise erfolgen, daß bei einer hohen Eingangsspannung nur solche Schaltglieder mit einem vorgegebenen Tastverhältnis arbeiten, die für die Herabsetzung der Eingangsspannung zuständig sind. Die für die Heraufsetzung der Eingangsspannung zuständigen Schaltglieder bleiben abgeschaltet. Sinkt die Eingangsspannung, steigt das Tastverhältnis solcher zuerst erwähnten Schaltglieder bis auf einen maximalen Wert, der zum Beispiel bei 100 % liegen kann. Reicht dieses Tastverhältnis nicht aus, um die Höhe der Ausgangsspannung aufrechtzuerhalten, beginnen die für ein Hochsetzen der Eingangsspannung zuständigen Schaltglieder mit steigendem Tastverhältnis zu schalten.

Die Ansteuerung der Schaltglieder kann für das Herabsetzen und das Heraufsetzen der Eingangsspannung mit zwei getrennten Regelanordnungen erfolgen, die mit zwei getrennten Ansteuerspannungen für die jeweiligen zuständigen Schaltglieder arbeiten. Um ein abgestimmtes Regelverhalten beider Regelanordnungen zu gewährleisten ist es notwendig, die in den jeweiligen Regelanordnungen angeordneten Oszillatoren miteinander zu synchronisieren. Das bedeutet neben dem erhöhten Aufwand für zwei getrennte Regelanordnungen auch einen erhöhten Aufwand für die Bewerkstelligung der Synchronisation.

Aufgabe der Erfindung ist es deshalb, den Aufwand für die Schaltungsanordnung zum Ansteuern der Schaltglieder eines Auf-Abwärts-Spannungswandlers der eingangs genannten Art zu verringern.

Diese Aufgabe wird erfindungsgemäß durch die im Kennzeichen des Anspruchs 1 angegebenen Merkmale gelöst.

Danach wird nur noch eine Regelanordnung verwendet, die eine erste von zwei benötigten Ansteuerspannungen erzeugt. Der Oszillator und die Regelspannungserzeugungsschaltung dieser Regelanordnung wird für die Erzeugung der noch benötigten zweiten Ansteuerspannung mitverwendet. Die Spannung des Oszillators wird dabei um ein vorgegebenes Maß eines Spannungswertes angehoben.

Vorteilhafte Ausführungsformen der Erfindung sind Gegenstand von Unteransprüchen.

Danach besteht durch die Wahl des Maßes für die Anhebung der Oszillatorspannung der einen Regelanordnung die Möglichkeit, die verschiedenen Betriebsweisen des Auf-Abwärts-Spannungswandlers entweder aneinanderzureihen oder überlappen zu lassen.

Weiter vorteilhaft ist, daß in jedem Fall eine kontinuierliche Regelung der Ausgangsspannung möglich ist.

Nachfolgend wird ein Ausführungsbeispiel der Erfindung anhand einer Zeichnung näher erläutert.

In der Figur ist ein Auf-Abwärts-Spannungswandler dargestellt, der in einem Längszweig ein erstes Schaltglied T1 und in zwei Querzweigen zwei zweite Schaltglieder T2A und T2B aufweist. Das erste Schaltglied T1 ermöglicht ein Herabsetzen einer vorgegebenen Eingangsspannung Uin zu einer vorgegebenen Ausgangsspannung Uout, wenn die Eingangsspannung Uin größer ist als die vorgegebene Ausgangsspannung Uout. Die zweiten Schaltglieder T2A und T2B ermöglichen ein Heraufsetzen der Eingangsspannung Uin zu der vorgegebenen Ausgangsspannung Uout, wenn die Eingangsspannung Uin Kleiner ist als die vorgegebene Ausgangsspannung Uout.

In der Figur sind neben den genannten Schaltgliedern T1 und T2A, T2B noch eine erste Diode D1, ein Übertrager Ü mit einem entsprechenden Ausgangskreis zum Bereitstellen einer potentialgetrennten Ausgangsspannung Uout und eine Drosselspule L gezeigt, die zusammen mit den zuvor erwähnten Schaltgliedern T1, T2A und T2B in der dargestellten Zusammenschaltung bis auf eine Ansteuerschaltung für die Schaltglieder T1, T2A und T2B einen prinzipiellen Aufbau eines Auf-Abwärts-Spannungswandlers wiedergeben. Insbesondere gibt die Zusammenschaltung den Aufbau eines stromgespeisten Gegentaktwandlers wieder.

Die Ansteuerung des ersten Schaltgliedes T1 erfolgt über eine Steuerspannungserzeugungsschaltung, die eine Regelspannungserzeugungsschaltung zur Erzeugung einer Regelspannung Uerr und einen Oszillator OSZ zur Erzeugung einer Oszillatorspannung Uosz aufweist. Die Oszillatorspannung Uosz ist dabei eine Dreieckspannung. Die Regelspannungserzeugungsschaltung ist ein Vergleicher, der in der Weise beschaltet ist, daß an einem zugehörigen negativen Eingang über einen Eingangsspannungsteiler und einem Optokopplertransistor Top, der in Wirkverbindung steht mit der Optokopplerleuchtdiode Dop im Ausgangskreis des Übertragers Ü zur Übermittlung einer Ersatzgröße für die Ausgangsspannung Uout, eine Ersatzgröße für die Ausgangsspannung Uout des Auf-Abwärts-Spannungswandlers und an einem zugehörigen positiven Eingang eine Referenzspannung Uref zugeführt ist. Als Ergebnis des Vergleichs zwischen der Ersatzgröße für die Ausgangsspannung Uout und der Referenzspannung Uref erzeugt der Vergleicher eine Regelspannung Uerr, die als Maß für die Ansteuerung des Schaltgliedes T1 dient.

Hierzu ist die Regelspannung Uerr an einen positiven und die Oszillatorspannung Uosz an einen negativen Eingang eines ersten Pulsweitenmodulators PWM1 geführt. Der erste Pulsweitenmodulator PWM1 bildet aus den beiden Eingangsspannungen eine erste Steuerspannung Upwm1, die, je nach Größe der Regelspannung Uerr, mit einem Tastverhältnis bis z.B. 100 % das erste Schaltglied T1 steuert. Das Tastverhältnis ergibt sich aus der Überschneidung der Regelspannung Uerr mit der dreieckförmigen Oszillatorspannung Uosz.

Für die Erzeugung einer zweiten Steuerspannung Upwm2, die für die Ansteuerung der zweiten Schaltglieder T2A und T2B benötigt wird, wird die Regelspannungserzeugungsschaltung für die Regelspannung Uerr und der Oszillator OSZ der Ansteuerschaltung für das erste Schaltglied T1 mitverwendet. Außer den gerade erwähnten Schaltungsteilen ist zur Erzeugung der zweiten Steuerspannung Upwm2 ein zweiter Pulsweitenmodulator PWM2 angeordnet. An einem positiven Eingang des zweiten Pulsweitenmodulators PWM2 ist die Regelspannung Uerr angelegt. An einem negativen Eingang des zweiten Pulsweitenmodulators PWM2 ist die Oszillatorspannung Uosz angelegt, die durch eine zwischengeschaltete Spannungsanhebeschaltung Uc um ein vorgegebenes Maß angehoben wird.

Das Maß der Anhebung entspricht beispielsweise einem Wert, der dem Spitze-Spitze-Wert der Oszillatorspannung Uosz entspricht. In diesem Fall werden die verschiedenen Betriebsweisen des Auf-Abwärts-Spannungswandlers aneinandergereiht. Entspricht das Maß der Anhebung einem Wert, der kleiner ist als der Spitze-Spitze-Wert der Oszillatorspannung Uosz, überlappen sich die beiden Betriebsweisen des Auf-Abwärts-Spannungswandlers.

Der zweite Pulsweitenmodulator PWM2 vergleicht die Regelspannung Uerr mit der durch die Spannungsanhebeschaltung Uc angehobenen Oszillatorspannung Uosz und bildet daraus die zweite Steuerspannung Upwm2. Die zweite Steuerspannung Upwm2 ist, wie die erste Steuerspannung Upwm1, eine Rechteckspannung mit veränderlichem Tastverhältnis, das sich aus der Überschneidung der Regelspannung Uerr und der angehobenen Oszillatorspannung Uosz ergibt.

Da die Oszillatorspannung Uosz für den zweiten Pulsweitenmodulator PWM2 angehoben ist, erzeugt der zweite Pulsweitenmodulator PWM2 erst eine zweite Steuerspannung Upwm2, wenn die Regelspannung Uerr in einem Bereich liegt, der sich mit der angehobenen Oszillatorspannung Uosz überdeckt.

Entspricht die Anhebung der Oszillatorspannung Uosz dem Spitze-Spitze-Wert der Oszillatorspannung Uosz, wird erstmalig eine zweite Steuerspannung Upwm2 erzeugt, wenn die Regelspannung Uerr den Spitze-Spitze-Wert der Oszillatorspannung Uosz in vollem Umfang überschreitet. Dies hat die schon angesprochene Folge, daß die verschiedenen Betriebsweisen des Auf-Abwärts-Spannungswandlers aneinandergereiht werden. Entspricht dagegen die Anhebung nicht oder nicht ganz dem Spitze-Spitze-Wert der Oszillatorspannung Uosz, gibt es einen Bereich, in dem die Regelspannung Uerr sowohl die nicht angehobene als auch die angehobene Oszillatorspannung Uosz überdeckt. Das hat dann die ebenfalls schon angesprochene Folge, daß sich die verschiedenen Betriebsweisen des Auf-Abwärts-Spannungswandlers in dem angegebenen Bereich überlappen.

Die Ansteuerung der beiden in den Querzweigen liegenden zweiten Schaltgliedern T2A und T2B erfolgt mit der zweiten Steuerspannung Upwm2 in der Weise, daß sie im Abwärtsregelfall im Gegentakt mit einem Tastverhältnis von 50 % und halber Schaltfrequenz schalten. Im Aufwärtsregelfall wird das Tastverhältnis im Gegentakt von 50 % bis zu einem maximalen Tastverhältnis erhöht.

Zur Durchführung dieser Maßnahmen ist eine logische Verknüpfungsschaltung angeordnet, die aus zwei Teilschaltungen besteht. Die erste Teilschaltung ist durch eine Flip-Flop-Schaltung FF realisiert, die in der Weise beschaltet ist, daß sie mit jedem Impuls an einem Eingang C1 die beiden Konträrausgänge Q und Q negiert jeweils in einen gegenüber vormals konträren Zustand schaltet. Die Impulse am Eingang C1 liefert die erste Steuerspannung Upwm1. Die Flip-Flop-Schaltung FF erzeugt damit an den zugehörigen Ausgängen Q und Q quer ein Grundtastverhältnis von 50 %, indem sie bei jeder positiven Flanke der ersten Steuerspannung Upwm 1 hin- und herschaltet.

Die Erhöhung des Grundtastverhältnisses erfolgt durch eine Additionsschaltung, die durch zwei ODER-Schaltungen OD1 und OD2 gebildet ist. Jeweils ein erster Eingang der ODER-Schaltungen OD1 und OD2 ist mit je einem der Ausgänge Q und Q negiert der Flip-Flop-Schaltung FF verbunden. An die jeweils zweiten Eingänge der ODER-Schaltungen OD1 und OD2 ist die zweite Steuerspannung Upwm2 angeschlossen. Die zweite Steuerspannung Upwm2 sorgt für die Erhöhung des Grundtastverhältnisses, indem die Impulse der zweiten Steuerspannung Upwm2 auf die Impulse der Ausgänge Q und Q quer über die beiden ODER-Schaltungen OD1 und OD2 addiert werden. An den jeweiligen Ausgängen der ODER-Schaltungen OD1 und OD2 stehen auf diese Weise zwei Steuerspannungen Upwm2A und Upwm2B zur Verfügung, die die beiden in den Querzweigen liegenden Schaltglieder T2A und T2B wie oben angegeben steuern.

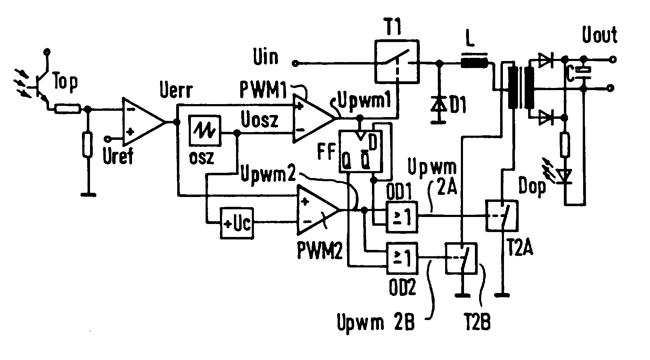

In der Figur 1 ist der erste Pulsweitenmodulator PWM1 vereinfacht dargestellt. Der erste Pulsweitenmodulator PWM1 kann beispielsweise durch ein Schaltregler-IC realisiert sein, in dem zusätzliche notwendige Funktionen wie Strombegrenzung, Softstart, Spannungsstabilisierung und ähnliches enthalten sind. Für den zweiten Pulsweitenmodulator PWM2 sind diese Funktionen und ihre Zusatzschaltungen nicht notwendig, da diese Funktionen vom ersten Pulsweitenmodulator PWM1 übernommen werden.

## Patentansprüche

1. Schaltungsanordnung zum Ansteuern der Schaltglieder eines Auf-Abwärts-Spannungswandlers mit einem ersten Schaltglied (T1) in einem Längszweig zur Abwärtswandlung einer Eingangsspannung (Uin) und zwei zweiten Schaltgliedern (T2A, T2B) in einem jeweiligen Querzweig zur Aufwärtswandlung der Eingangsspannung (Uin), von denen das erste Schaltglied (T1) über einen zugehörigen Steuereingang zur Aufnahme einer ersten Steuerspannung (Upwm1) mit einer Steuerspannungserzeugungsschaltung verbunden ist, die eine Regelspannungserzeugungsschaltung zur Erzeugung einer Regelspannung (Uerr) und einen Oszillator (OSZ) zur Erzeugung einer Oszillatorspannung (Uosz) aufweist, von denen die Regelspannungserzeugungsschaltung und der Oszillator (OSZ) mit einem ersten Pulsweitenmodulator (PWM1) zur Erzeugung der ersten Steuerspannung (Upwm1) aus der Regelspannung (Uerr) und der Oszillatorspannung (Uosz) verbunden sind,
**dadurch gekennzeichnet**,
daß ein zweiter Pulsweitenmodulator (PWM2) vorgesehen ist, der mit einem ersten Eingang zur Aufnahme der Regelspannung (Uerr) mit der Regelspannungserzeugungsschaltung und mit einem zweiten Eingang über eine zwischengeschaltete Spannungsanhebeschaltung (Uc) mit dem Oszillator (OSZ) zur Aufnahme der Oszillatorspannung (Uosz), die durch die Spannungsanhebeschaltung (Uc) um ein vorgegebenes Maß angehoben wird, verbunden ist, und
daß der zweite Pulsweitenmodulator (PWM2) einen Ausgang für eine zweite Steuerspannung (Upwm2) aufweist, der mit einer logischen Verknüpfungsschaltung bestehend aus einer ersten und zweiten Teilschaltung verbunden ist, von denen die erste Teilschaltung an die erste Steuerspannung (Upwm1) angeschlossen ist und für je ein Zwischensteuersignal zwei Gegentaktausgänge aufweist, die mit je einer ODER-Schaltung (OD1, OD2) der zweiten Teilschaltung verbunden sind, von denen jede ODER-Schaltung (OD1, OD2) parallel zum jeweiligen Anschluß an den einen Ausgang der ersten Teilschaltung an den Ausgang des zweiten Pulsweitenmodulators (PWM2) angeschlossen ist und jeweils einen Ausgang aufweist, der je an einen Steuereingang eines der zwei zweiten Schaltglieder (T2A, T2B) angeschlossen ist.

2. Schaltungsanordnung nach Anspruch 1,
**dadurch gekennzeichnet**,
daß die Spannungsanhebeschaltung (Uc) in der Weise ausgebildet ist, daß die Oszillatorspannung (Uosz) in einem Maß angehoben wird, das dem Spitze-Spitze-Wert der Oszillatorspannung (Uosz) entspricht.

3. Schaltungsanordnung nach Anspruch 1,
**dadurch gekennzeichnet**,
daß die Spannungsanhebeschaltung (Uc) in der Weise ausgebildet ist, daß die Oszillatorspannung (Uosz) in einem Maß angehoben wird, das einem Wert unterhalb dem Spitze-Spitze-Wert der Oszillatorspannung (Uosz) entspricht.

## Claims

1. Circuit arrangement for driving the switching elements of a step-up/step-down voltage transformer having a first switching element (T1) in a longitudinal. branch for step-down transformation of an input voltage (Uin) and two second switching elements (T2A, T2B) in a respective transverse branch for step-up transformation of the input voltage (Uin), of which the first switching element (T1) is connected via an associated control input for receiving a first control voltage (Upwm1) to a control-voltage generator circuit which has a regulating-voltage generator circuit for generating a regulating voltage (Uerr) and an oscillator (OSZ) for generating an oscillator voltage (Uosz), of which the regulating-voltage generator circuit and the oscillator (OSZ) are connected to a first pulse-width modulator (PWM1) for generating the first control voltage (Upwm1) from the regulating voltage (Uerr) and from the oscillator voltage (Uosz),
characterized
in that a second pulse-width modulator (PWM2) is provided, which is connected by a first input for receiving the regulating voltage (Uerr) to the regulating-voltage generator circuit and by a second input, via an interposed voltage-increase circuit (Uc), to the oscillator (OSZ) in order to receive the oscillator voltage (Uosz) which is increased by a predetermined amount by the voltage-increase circuit (Uc), and
in that the second pulse-width modulator (PWM2) has an output for a second control voltage (Upwm2), which is connected to a logic circuit consisting of first and second circuit parts, of which the first circuit part is connected to the first control voltage (Upwm1) and has two push-pull outputs, each for one intermediate control signal, which are each connected to an OR circuit (OD1, OD2) of the second circuit part, of which each OR circuit (OD1, OD2) is connected, in parallel with the respective connection to one of the outputs of the first circuit part, to the output of the second pulse-width modulator (PWM2) and respectively has one output which is in each case connected to a control input of one of the two second switching elements (T2A, T2B).

2. Circuit arrangement according to Claim 1,
characterized
in that the voltage-increase circuit (Uc) is designed such that the oscillator voltage (Uosz) is increased to an extent which corresponds to the peak-to-peak value of the oscillator voltage (Uosz).

3. Circuit arrangement according to Claim 1,
characterized
in that the voltage-increase circuit (Uc) is designed such that the oscillator voltage (Uosz) is increased to an extent which corresponds to a value below the peak-to-peak value of the oscillator voltage (Uosz).

## Revendications

1. Montage de commande des éléments d'interruption d'un convertisseur de tension dévolteur-survolteur comportant un premier élément (T1) d'interruption dans une branche longitudinale pour l'abaissement d'une tension (Uin) d'entrée et deux seconds éléments (T2A, T2B) d'interruption dans une branche transversale pour l'élévation de la tension (Uin) d'entrée, le premier élément (T1) d'interruption étant relié par l'intermédiaire d'une entrée de commande lui appartenant, pour la réception d'une première tension (Upwm1) de commande, à un circuit de production de tension de commande, qui comporte un circuit de production de tension de réglage pour la production d'une tension (Uerr) de réglage et un oscillateur (OSZ) pour la production d'une tension (Uosz) d'oscillateur, le circuit de production de tension de réglage et l'oscillateur (OSZ) étant reliés à un premier modulateur (PWM1) de largeur d'impulsion destiné à produire la première tension (Upwm1) de commande à partir de la tension (Uerr) de réglage et de la tension (Uosz) d'oscillateur,
caractérisé en ce que
il est prévu un second modulateur (PWM2) de largeur d'impulsion, qui est relié par une première entrée destinée à la réception de la tension (Uerr) de réglage au circuit de production de tension de réglage et par une seconde entrée, par l'intermédiaire d'un circuit (Uc) intermédiaire d'élévation de tension à l'oscillateur (OSZ) pour la réception de la tension (Uosz) d'oscillateur, qui est élevée d'une mesure prescrite par le circuit (Uc) d'élévation de tension et
le second modulateur (PWM2) de largeur d'impulsion comporte une sortie pour une seconde tension (Upwm2) de commande, qui est reliée à un circuit logique combinatoire constitué de premier et second circuits partiels, dont le premier est connecté à la première tension (Upwm1) de commande et qui comporte pour chaque signal de commande intermédiaire deux sorties push-pull, ces deux sorties push-pull étant reliées chacune à un circuit OU (OD1, OD2) du second circuit partiel, chaque circuit OU (OD1, OD2) étant connecté, en parallèle avec la borne respective raccordant à l'une des sorties du premier circuit partiel, à la sortie du second modulateur (PWM2) de largeur d'impulsion et comportant une sortie, qui est connectée à une entrée de commande d'un des deux seconds éléments (T2A, T2B) d'interruption.

2. Montage suivant la revendication 1,
caractérisé en ce que
le circuit (Uc) d'élévation de tension est formé de sorte à élever la tension (Uosz) d'oscillateur à un point qui correspond à la valeur crête à crête de la tension (Uosz) d'oscillateur.

3. Montage suivant la revendication 1,
caractérisé en ce que
le circuit (Uc) d'élévation de tension est formé de sorte à élever la tension (Uosz) d'oscillateur à un point, qui correspond à une valeur plus petite que la valeur crête à crête de la tension (Uosz) d'oscillateur.
